# EUROPEAN PATENT APPLICATION

(11) **EP 4 811 778 A1**
(43) Date of publication of application: **23.09.2026**
(21) Application number: 25305358.1
(22) Date of filing: 17.03.2025
(51) Int. Cl.: H04N 19/117, H04N 19/167, H04N 19/176, H04N 19/61, H04N 19/82

(54) **CTU BOUNDARY PROCESSING FOR CASCADED IN-LOOP FILTERING**

(71) Applicant: InterDigital CE Patent Holdings, SAS, 75017 Paris (FR)
(72) Inventor: POIRIER, Tangi, 35235 THORIGNE-FOUILLARD (FR); BOISSON, Guillaume, 35137 PLEUMELEUC (FR); GALPIN, Franck, 35235 THORIGNE-FOUILLARD (FR); LE LEANNEC, Fabrice, 35830 BETTON (FR)
(74) Representative: Interdigital

(57) **Abstract**

Apparatuses and methods are disclosed including techniques for encoding and decoding video content. Techniques disclosed include reconstructing samples of a video frame of the video data to be encoded or decoded. The video frame is divided into full-regions and partial-regions according to a grid, where the partial-regions are located along the boundary of the video frame. Then, in-loop filtering is applied to the reconstructed samples, where for a full-region adjacent to a partial-region, the in-loop filtering comprises generating an extra processing region from reconstructed samples of the partial-region, and filtering the full-region using the extra processing region.

## Description

### BACKGROUND

Block-based predictive video coding techniques typically introduce various distortions into the reconstructed video content. To address these coding distortions, recent codecs - implemented according to video coding standards, such as the versatile video coding (VVC) standard, or according to the enhanced compression model (ECM) software - utilize various in-loop filters. For example, deblocking filters (DBF), bilateral filters (BIF), filters applying sample adaptive offsets (SAO), and adaptive loop filters (ALF/CCALF) are all in-loop filters that are designed to attenuate coding artifacts and to improve the reconstructed video content fidelity. In recent codecs, in-loop filters are applied concurrently as well as successively. Cascading filtering complicates the processing of regions in the vicinity of the frame's boundary, especially in the case where filters with large kernels are used. Techniques are needed to address the filtering of regions along the frame's boundary.

### SUMMARY

Aspects disclosed in the present disclosure describe methods for encoding and decoding video data. The methods include reconstructing samples of a video frame of the video data to be encoded or decoded. The video frame is divided into full-regions and partial-regions according to a grid, where the partial-regions are located along the boundary of the video frame. The methods further include in-loop filtering the reconstructed samples, where for a full-region adjacent to a partial-region, the in-loop filtering comprises generating an extra processing region from reconstructed samples of the partial-region and filtering the full-region using the extra processing region.

Aspects disclosed in the present disclosure describe apparatuses for encoding and decoding video data. The apparatuses comprise at least one processor and memory storing instructions. The instructions, when executed by the at least one processor, cause the apparatuses to reconstruct samples of a video frame of the video data to be encoded or decoded. The video frame is divided into full-regions and partial-regions according to a grid, where the partial-regions are located along the boundary of the video frame. The instructions further cause the apparatus to in-loop filter the reconstructed samples, where for a full-region adjacent to a partial-region, the in-loop filtering comprises generating an extra processing region from reconstructed samples of the partial-region and filtering the full-region using the extra processing region.

Further aspects disclosed in the present disclosure describe a non-transitory computer-readable medium comprising instructions executable by at least one processor to perform methods for encoding and decoding video data. The methods include reconstructing samples of a video frame of the video data to be encoded or decoded. The video frame is divided into full-regions and partial-regions according to a grid, where the partial-regions are located along the boundary of the video frame. The methods further include in-loop filtering the reconstructed samples, where for a full-region adjacent to a partial-region, the in-loop filtering comprises generating an extra processing region from reconstructed samples of the partial-region and filtering the full-region using the extra processing region.

### BRIEF DESCRIPTION OF THE DRAWINGS

FIG. 1 is a block diagram of an example system, according to which aspects of the present embodiments can be implemented.
FIG. 2 is a block diagram of an example video encoder, according to which aspects of the present embodiments can be implemented.
FIG. 3 is a block diagram of an example video decoder, according to which aspects of the present embodiments can be implemented.
FIG. 4 is a block diagram illustrating in-loop processing according to the VVC standard, according to which aspects of the present embodiments can be implemented.
FIG. 5 is a block diagram illustrating in-loop processing according to the ECM software, according to which aspects of the present embodiments can be implemented.
FIG. 6 is a block diagram illustrating adaptive filtering, according to which aspects of the present embodiments can be implemented.
FIG. 7 is a diagram illustrating 9x9 and 13x13 diamond-shaped kernels, according to which aspects of the present embodiments can be implemented.
FIG. 8 is a diagram illustrating processing a frame along its boundary, according to which aspects of the present embodiments can be implemented.
FIG. 9 is a diagram illustrating a CTU grid, according to which aspects of the present embodiments can be implemented.
FIG. 10 is a diagram illustrating a shifted CTU grid, according to which aspects of the present embodiments can be implemented.
FIG. 11 is a diagram illustrating processing a CTU, according to which aspects of the present embodiments can be implemented.
FIG. 12 is a diagram illustrating processing a CTU and an adjacent partial CTU, according to which aspects of the present embodiments can be implemented.
FIG. 13 is a flowchart of an example method for encoding video data, according to which aspects of the present embodiments can be implemented.
FIG. 14 is a flowchart of an example method for decoding video data, according to which aspects of the present embodiments can be implemented.

### DETAILED DESCRIPTION

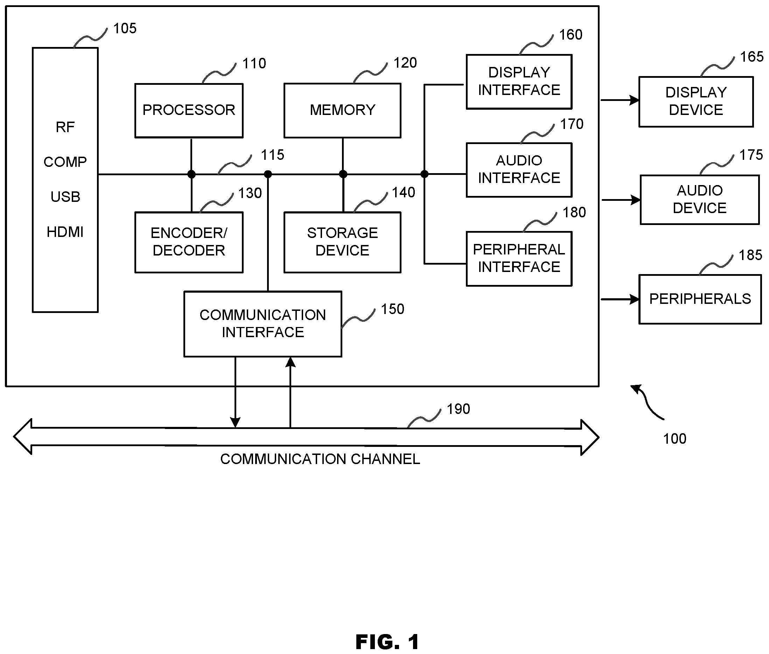

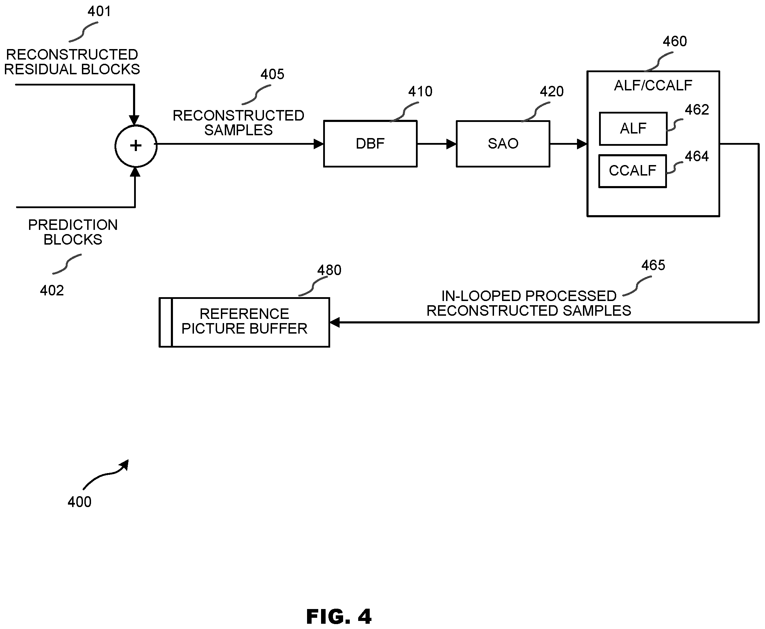

Apparatuses and methods are disclosed in the present disclosure for in-loop processing of reconstructed samples associated with the encoding and the decoding of video data. Traditional systems and methods for predictive video coding are described next in reference to FIGS. 1-3, followed by a description of aspects of the present disclosure, described in reference to FIGS. 4-14.

FIG. 1 illustrates a block diagram of an example system 100. System 100 can be embodied as a device and can be configured to perform one or more of the aspects described in this application. Examples of such devices, include, but are not limited to, various electronic devices such as personal computers, laptop computers, smartphones, tablet computers, digital multimedia set-top boxes, digital television receivers, personal video recording systems, connected home appliances, and servers. Elements of system 100, singly or in combination, can be embodied in an integrated circuit, multiple integrated circuits, and/or discrete components. For example, in at least one embodiment, the processing 110 and encoder/decoder 130 elements of system 100 are distributed across multiple integrated circuits and/or discrete components. In various embodiments, the system 100 is communicatively coupled to other systems, or to other electronic devices, via, for example, a communications bus or through dedicated input and/or output ports.

The system 100 includes at least one processor 110 that can be configured to execute instructions loaded therein for implementing, for example, the various aspects described in this application. Processor 110 can include embedded memory, input and output interfaces, and various other circuitries as known in the art. The system 100 includes at least one memory 120, such as a volatile memory device and/or a non-volatile memory device. System 100 includes a storage device 140, which can include non-volatile memory and/or volatile memory, such as EEPROM, ROM, PROM, RAM, DRAM, SRAM, flash, magnetic disk drives, and/or optical disk drives. The storage device 140 can be an internal storage device, an attached storage device, and/or a network accessible storage device, for example.

System 100 includes an encoder/decoder module 130 configured to process data to provide encoded video data or decoded video data. The encoder/decoder module 130 can include its own processor and memory. The encoder/decoder module 130 can be implemented as a separate element of system 100 or can be incorporated within processor 110 as a combination of hardware and/or software as known to those skilled in the art. Additionally, the encoder/decoder module 130 represents module(s) that can be implemented in a separate device to perform encoding and/or decoding functions.

Program code that is to be loaded into processor 110 or into encoder/decoder 130 to perform the various aspects described in this application can be stored in a storage device 140 and subsequently loaded into memory 120 for execution by processor 110. In accordance with various embodiments, one or more of processor 110, memory 120, storage device 140, and encoder/decoder module 130 can store one or more of various items during the performance of the processes described in this application. Such stored items can include, but are not limited to, the input video, the decoded video or portions of the decoded video, the bitstream, matrices, variables, operational logic, and intermediate or final results from the processing of equations, formulas, operations.

In several embodiments, memory inside of the processor 110 and/or the encoder/decoder module 130 is used to store instructions and to provide working memory for processing functions that are needed during encoding or decoding. In other embodiments, however, memory external to the processing device (where, for example, the processing device can be either the processor 110 or the encoder/decoder module 130) can be used for one or more of these functions. The external memory can be the memory 120 and/or the storage device 140 that may comprise, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations.

The input to the elements of system 100 can be provided through various input devices as indicated in block 105. Such input devices include, but are not limited to, (i) an RF portion that receives an RF signal transmitted, for example, over the air by a broadcaster, (ii) a Composite input terminal (COMP), (iii) a USB input terminal, and/or (iv) an HDMI input terminal.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select, for example, a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements that perform these functions, for example, frequency selectors, signal selectors, band-limiters, channel selectors, filters, downconverters, demodulators, error correctors, and demultiplexers. The RF portion can include a tuner that performs some of these functions, including, for example, down-converting the received signal to a lower frequency (for example, an intermediate frequency or a near-baseband frequency) or to a baseband. In one set-top box embodiment, the RF portion and its associated input processing element receive an RF signal transmitted over a wired (for example, cable) medium, and perform frequency selection by filtering, down-converting, and filtering again to a desired frequency band. Various embodiments rearrange the order of the above-described (and other) elements, remove some of these elements, and/or add other elements performing similar or different functions. Added elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing integrated circuit or within processor 110 as necessary. Similarly, aspects of USB or HDMI interface processing can be implemented within separate interface integrated circuits or within processor 110 as necessary. The demodulated, error corrected, and demultiplexed stream is provided to various processing elements, including, for example, processor 110, and encoder/decoder 130 operating in combination with the memory and storage elements to process the data stream as necessary for presentation on an output device.

Various elements of system 100 can be provided within an integrated housing. Within the integrated housing, the various elements can be interconnected and transmit data therebetween using a suitable connection arrangement 115, for example, an internal bus as known in the art, including the I2C bus, wiring, and printed circuit boards.

The system 100 includes communication interface 150 that enables communication with other devices via communication channel 190. The communication interface 150 can include, but is not limited to, a transceiver configured to transmit and to receive data over communication channel 190. The communication interface 150 can include, but is not limited to, a modem or network card. The communication channel 190 can be implemented, for example, within a wired and/or a wireless medium.

Data can be streamed to the system 100, in various embodiments, using a Wi-Fi network such as IEEE 802.11. The Wi-Fi signal of these embodiments is received over the communication channel 190 and the communication interface 150 which can be adapted for Wi-Fi communications. The communication channel 190 of these embodiments is typically connected to an access point or router that provides access to outside networks including the Internet for allowing streaming applications and other over-the-top communications. In other embodiments, data can be streamed to the system 100 using a set-top box that delivers the data over the HDMI connection of the input block 105 or data can be streamed to the system 100 using the RF connection of the input block 105.

The system 100 can provide an output signal to various output devices, including a display device 165, an audio device (e.g., speaker(s)) 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display device 165, the audio device 175, or the other peripheral devices 185 using signaling such as AV.link, CEC, or other communication protocols that enable device-to-device control with or without user intervention. The output devices can be communicatively coupled to system 100 via dedicated connections through respective interfaces 160, 170, and 180. Alternatively, the output devices can be connected to system 100 using the communication channel 190 via the communication interface 150. The display device 165 and the audio device 175 can be integrated in a single unit with the other components of system 100 in an electronic device, for example, a television. In various embodiments, the display interface 160 includes a display driver, for example, a timing controller (T Con) chip.

Alternatively, the display device 165 and the audio device 175 can be separate from one or more of the other components, for example, if the RF portion of input 105 is part of a separate set-top box. In various embodiments in which the display device 165 and the audio device 175 are external components, the output signal can be provided via dedicated output connections, including, for example, HDMI ports, USB ports, or COMP outputs.

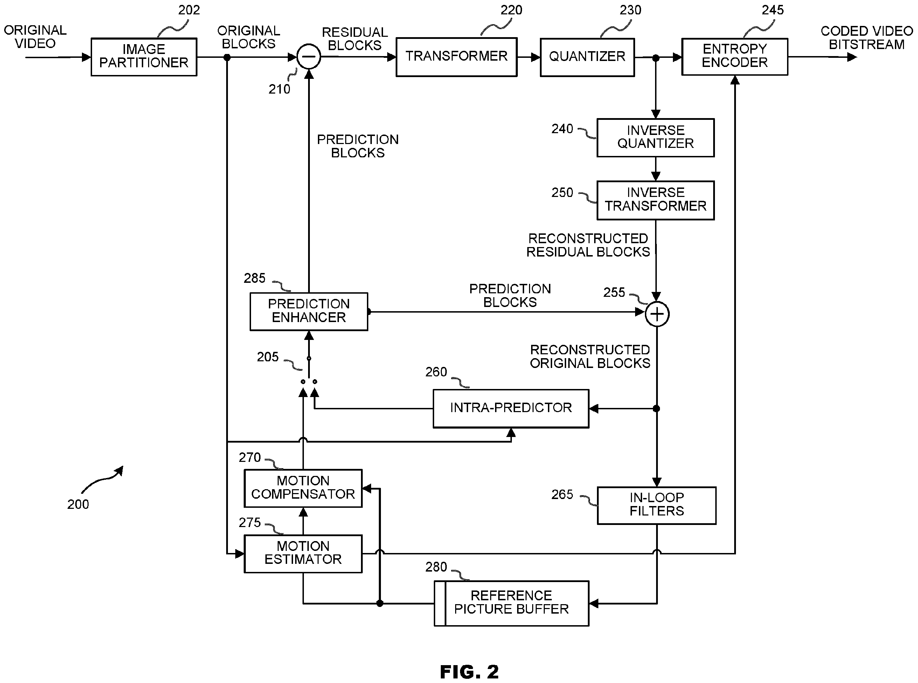

FIG. 2 illustrates a functional block diagram of an example video encoder 200. The video encoder 200 can be employed by the system 100 described in reference to FIG. 1. For example, the video encoder 200 can be an encoder that operates according to coding standards such as Advanced Video Coding (AVC, H.264/MPEG-4 | ISO/IEC 14496-10, 2020), High Efficiency Video Coding (HEVC, ITU-T H.265, ISO/IEC 23008-2), Versatile Video Coding (VVC, ITU-T H.266, ISO/IEC 23090-3, 2020), or according to the Enhanced Compression Model (ECM) software.

Prior to undergoing encoding, the video data can be pre-processed by a precoding processor (not shown). Such pre-processing can include applying a color model transform to the color components of the input video frames (e.g., conversion from RGB 4:4:4 to YCbCr 4:2:0) or mapping the color components of the input video frames to obtain a signal distribution that is more resilient to compression (for instance, applying a histogram equalizer and/or a denoising filter to one or more of the video frames' color components). The pre-processing can also include associating metadata with the video data that can be attached to the coded video bitstream.

In the encoder 200, a video frame is encoded by the encoder elements as generally described below. A picture (frame) of the given (i.e., original) video to be encoded is partitioned into coding units (namely, original blocks) by an image partitioner 202. Typically, a coding unit (CU) contains a luminance block and respective chroma blocks, and so, generally, operations described herein as applied to a CU are applied to the luminance block and to the respective chroma blocks. Following partition 202, each CU can be encoded using an intra-prediction mode or an inter-prediction mode. In an intra-prediction mode, a prediction of the CU is performed by an intra-predictor 260. **In** the intra-prediction mode, the content of a CU in a frame is predicted based on content from one or more other CUs of the same frame, using the other CUs' reconstructed version (available from the adder 255 output). **In** an inter-prediction mode, motion estimation and motion compensation are performed by a motion estimator 275 and a motion compensator 270, respectively. **In** the inter-prediction mode, the content of a CU in a frame is predicted based on content from one or more other CUs of neighboring frames, using the other CUs' reconstructed versions (available from the reference picture buffer 280). The encoder decides 205 which prediction result (one obtained through operations in the intra-prediction mode 260 or one obtained through operations in the inter-prediction mode 270, 275) to use for encoding a CU, and indicates the selected prediction mode by a prediction mode flag, for example. The selected prediction result may then be enhanced (e.g., filtered) by a prediction enhancer 285, outputting a respective prediction block. Once a prediction block is generated for each CU, a respective residual block is calculated, for example, by subtracting 210 the predicted CU (i.e., prediction block) from the CU (i.e., original block).

A CU's respective residual block or a partition thereof (i.e., a transform block) is then transformed into a coefficient block by a transformer 220 - that is, residual samples of the transform block are transformed into transform coefficients of the coefficient block. The resulting coefficient block is quantized by a quantizer 230. An entropy encoder 245 is next employed to entropy-encode the quantized coefficient block and respective coding parameters (e.g., syntax elements including motion vectors and other control data). Hence, the entropy-encoded quantized coefficient blocks and respective encoding parameters associated with each video frame of the original video are packed into the bitstream of the coded video data.

Along with the coding of the original video blocks, as described above, the encoder 200 reconstructs the coded original blocks to provide references for future predictions. Accordingly, quantized coefficient blocks (provided by the quantizer 230) are de-quantized, by an inverse quantizer 240, and then inverse transformed, by an inverse transformer 250, to reconstruct (decode) the residual blocks of respective original blocks. Adding 255 the reconstructed residual blocks to respective prediction blocks results in respective reconstructed original blocks. Thus, the encoder 200 also performs decoding operations 240, 250 through which the encoded pictures (frames) are reconstructed.

Following the reconstruction of the original blocks, in-loop filters 265 can be applied to the reconstructed picture (formed by the reconstructed original blocks). The filtered reconstructed pictures can then be stored in the reference picture buffer 280 and be used to facilitate the motion estimation 275 and compensation 270, as explained above. The in-loop filters 265 include various filters and offsets that can be applied to the reconstructed samples of a picture to reduce distortions introduced by the encoding process. For example, deblocking filter (DBF), bilateral filter (BIF), sample adaptive offset (SAO), and/or adaptive loop filter (ALF) can be applied to reduce encoding artifacts. Such filters and offsets (generally referred to herein also as in-loop filters or in-loop processes) are further described.

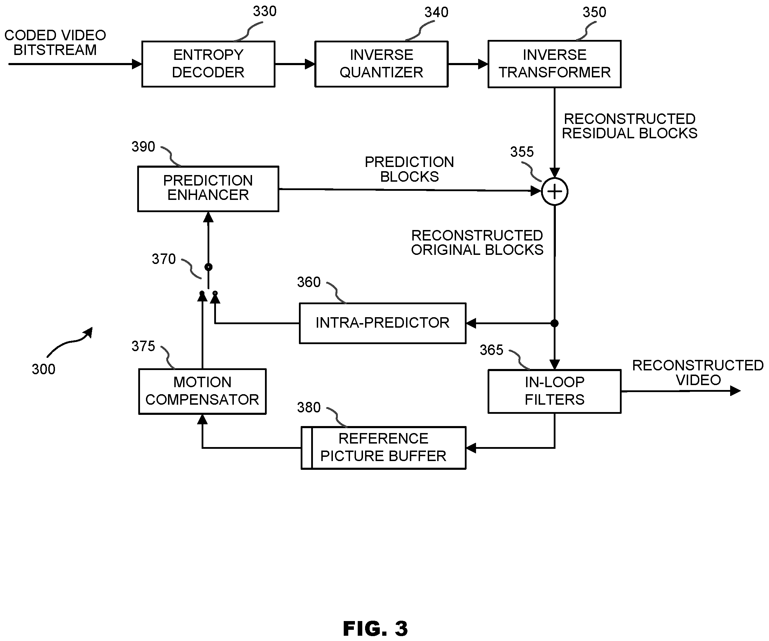

FIG. 3 illustrates a functional block diagram of an example video decoder 300. The video decoder 300 can be employed by the system 100 described in reference to FIG. 1. Generally, operational aspects of the video decoder 300 are reciprocal to operational aspects of the video encoder 200. In the decoder 300, the bitstream of coded video data, generated by the video encoder 200, is first entropy-decoded by an entropy decoder 330, decoding from the bitstream the quantized coefficient blocks and various coding parameters. The quantized coefficient blocks are de-quantized, by an inverse quantizer 340, and then are inverse transformed, by an inverse transformer 350, to decode (reconstruct) respective residual blocks. Adding 355 the reconstructed residual blocks to respective prediction blocks results in respective reconstructed original blocks. Depending on the selected prediction mode, a predicted original block can be obtained 370 from an intra-predictor 360 or from a motion compensator 375 and may then be enhanced (e.g., filtered) by a prediction enhancer 390, generating a prediction block. In-loop filters 365 (e.g., DBF, BIF, SAO, and/or ALF) can be applied to the reconstructed picture (formed by the reconstructed original blocks), outputting a reconstructed (decoded) video frame. The filtered reconstructed picture is also stored in a reference picture buffer 380 to facilitate motion compensation 375. Note that, for a given picture, the content of the reference picture buffer 380 of the decoder 300 should be identical to the content of the reference picture buffer 280 of the encoder 200.

A post-decoding processor (not shown) can further process the reconstructed video. For example, post-decoding processing can include an inverse color model transform (e.g., conversion from YCbCr 4:2:0 to RGB 4:4:4) or an inverse mapping to reverse the mapping process performed by the pre-encoding processor. The post-decoding processor can use metadata that were derived by the pre-encoding processor and/or were signaled in the video bitstream.

Aspects disclosed herein are described in reference to a region of a video frame (or a video picture) to which coding tools may be applied by an encoder 200 or by a decoder 300. Generally, aspects described herein may be applied to a video region formed by a video partition of any shape or size. The video region may be a video slice, a coding tree unit (CTU), or a CU (for which an inter-prediction or an intra-prediction can be applied), or a partition thereof, each can include samples of a luma component, *Y,* and chroma components, *Cr* and *Cb* (denoted herein also by C).

Aspects of the present disclosure relate to in-loop processing as, for example, performed by the in-loop filters 265, 365 in the encoder 200 and in the decoder 300 described above in reference to FIG. 2 and to FIG. 3. Block-based video compression 200, 300 introduces distortions into the content of the decoded video. Specifically, the intra-prediction 260 and the inter-prediction 270, 275 (that are applied to produce the prediction blocks, as shown in FIG. 2) as well as the transform 220 and the quantization 230 (that are applied to encode the residual blocks) introduce a variety of artifacts into the reconstructed original blocks. Such artifacts, typically, are exacerbated to a larger degree the more the targeted bitrate level decreases. In order to reduce distortions introduced by compression process, video coding standards (e.g., VVC) and video coding software (e.g., ECM) implement various in-loop filters, such as DBF, BIF, SAO and ALF. Generally, DBF aims at smoothing discontinuities that may appear along video block boundaries; SAO aims at attenuating artifacts that occur around image edges and also aims at correcting the local average intensity changes (e.g., banding artifact) using offsets; BIF aims at further denoising the reconstructed pictures from artifacts induced by quantization in the transform domain; and ALF aims at further improving the fidelity of the reconstructed image according to a rate-distortion criterion. In-loop filters as defined in the VVC standard and in the ECM software are further described below.

The VVC standard implements in-loop filters, such as DBF, SAO, ALF, and cross-component ALF (CCALF) (see, Karczewicz M., et al., "VVC In-Loop filters", in IEEE Transactions on Circuits and Systems for Video Technology, Vol. 31, No 10, October 2021, hereinafter "Karczewicz"). DBF is applied to reduce discontinuities across video blocks' boundaries. SAO is applied to reduce artifacts resulting from the quantization of the transform coefficients (e.g., by the quantizer 230). ALF and CCALF are adaptively applied to enhance the reconstructed video blocks, using Wiener-filter encoding, for example. The workflow of the in-loop processing is described in reference to FIG. 4 (see, Algorithm Description for Versatile Video Coding and Test Model 11 (VTM 11), §3.7, hereinafter "JVET-T2002").

FIG. 4 is a block diagram illustrating in-loop processing according to the VVC standard 400. The in-loop processing 400 is applied to (luma and chroma) reconstructed samples 405 obtained by adding prediction blocks 402 to respective reconstructed residual blocks 401 (see adders 255, 355 in FIG. 2 and FIG. 3). As shown in FIG. 4, the in-loop processing 400 is performed by filters including a DBF 410, an SAO 420, and an ALF/CCALF 460, the output of that processing includes filtered reconstructed samples 465. Thus, for example, if local deblocking conditions are met, reconstructed samples located along block boundaries are first filtered with the DBF 410. Then, offsets are locally added to respective samples by the SAO 420, where the offsets are determined based on a classification of the respective samples (e.g., using a band-classifier or an edge-classifier). Next, various filters of the ALF 462 and/or the CCALF 464 can be applied to the samples. The filtered reconstructed samples 465 are then stored in the reference picture buffer 480 for further processing (as described above with respect to the reference picture buffers 280, 380 of the encoder 200 and the decoder 300). Note that each of the illustrated in-loop filters 410, 420, 460 may represent a set of filters, for example, different filters in the set may be processing samples from respective color components or may be selected based on coding parameters.

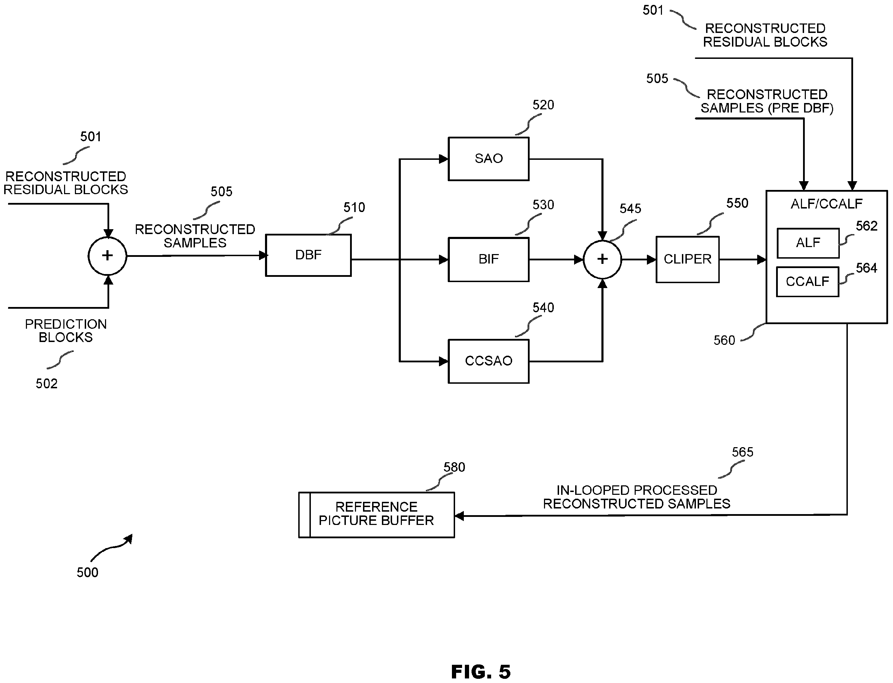

Additional in-loop filters were introduced in the ECM software, including BIF and cross-component SAO (CCSAO) (see, Algorithm Description of Enhanced Compression Model 10 (ECM 10), hereinafter "JVET-AE2025"). Both BIF and CCSAO are carried out concurrently with the SAO, processing the output of the DBF 410, as described next in reference to FIG. 5.

FIG. 5 is a block diagram illustrating in-loop processing according to the ECM software. The in-loop processing 500 is applied to (luma and chroma) reconstructed samples 505 obtained by adding prediction blocks 502 to respective reconstructed residual blocks 501 (see adders 255, 355 in FIG. 2 and FIG. 3). In the example of FIG. 5, a DBF 510 and an ALF/CCAL 560 operate similarly to their counterparts in FIG. 4. However, the in-loop processing, according to the ECM software, is enhanced by replacing the processing performed by the SAO 420, shown in FIG. 4, with processing carried out by an SAO 520, a BIF 530, and a CCSAO 540, including the adder 545 and the clipper 550 shown in FIG. 5. Thus, the output of DBF 510 is fed into the SAO 520, the BIF 530, and the CCSAO 540 that operate in parallel. The SAO 520 operates on the DBF-filtered samples similarly to the SAO 420 of FIG. 4. The BIF 530 filters the DBF-filtered samples based on a 5x5 diamond-shaped kernel, using filter coefficients (e.g., to be fetched in a precomputed look-up table) that depend on: 1) the used quantization parameter; 2) the difference between neighboring samples; and 3) the sample to be filtered. The BIF 530 operates independently and in a similar manner on samples of luma and chroma components. The CCSAO 540 is used to refine the DBF-filtered samples. Similar to SAO 520, CCSAO classifies the samples into different categories, derives one offset for each category, and adds each of the derived offsets to samples in its respective category. In contrast to SAO, CCSAO utilizes also the other color components of a sample to classify that sample into different color bands. The outputs of SAO 520, BIF 530 and CCSAO 540 are added 545 and their sum is then being clipped 550, generating the input to the ALF/CCALF 560. The filtered reconstructed samples 565 are then stored in the reference picture buffer 580 for further processing (as described above with respect to the reference picture buffers 280, 380 of the encoder 200 and the decoder 300).

Generally, ALF/CCALF 460, 560 employs adaptive filters that are applied to improve the fidelity of the reconstructed original samples. The adaptive filters' coefficients can be online-derived (i.e., learned) - for example, the coefficients can be determined by minimizing the mean square error (MSE) between the original samples and their reconstructed values using Wiener-filter encoding. The coefficients can then be signaled by the encoder 200 in the bitstream and decoded therefrom by the decoder 300. The adaptive filters' coefficients can also be fixed - for example, pre-trained coefficients can be hard-coded and be accessible to the encoder and to the decoder. In VVC, the adaptive filters are point-symmetrical, direct current (DC) neutral (where, DC means a constant value signal), having integer coefficients, and using 7x7 diamond-shaped kernels for luma and 5x5 diamond-shaped kernels for chroma. (See, Karczewicz for further details).

An adaptive filter operates on *R*(*x,y*), denoting a reconstructed sample value, to produce therefrom *R̅*(*x, y*), denoting the respective filtered sample value. In the linear implementation of an adaptive filter, *R̅*(*x, y)* is computed as: $\overline{R} \left(x, y\right) = R \left(x, y\right) + \left[{\sum }_{i = 0}^{N - 2} {c}_{i} \times \left(Δ{R}_{i}^{+}+Δ{R}_{i}^{-}\right)\right] ,$ where (*cᵢ*)_{0≤*i*<*N*-1} denote the filter coefficients, $\begin{matrix}Δ {R}_{i}^{+} = R \left(x+{x}_{i},y+{y}_{i}\right) - R \left(x, y\right) , and \\ Δ {R}_{i}^{-} = R \left(x-{x}_{i},y-{y}_{i}\right) - R \left(x, y\right) .\end{matrix}$ Note that (±*xᵢ,* ±*yᵢ*) denote the coordinate offsets corresponding to reconstructed samples that are associated with the i-th coefficient *cᵢ*.

In the non-linear implementation of the adaptive filter, equation (1) becomes: $\overline{R} \left(x, y\right) = R \left(x, y\right) + \left[{\sum }_{i = 0}^{N - 2} {c}_{i} \times \left({f}_{i}^{+}+{f}_{i}^{-}\right)\right]$ and: $\begin{matrix}{f}_{i}^{+} = min \left({b}_{i},max\left(-{b}_{i},R\left(x+{x}_{i},y+{y}_{i}\right)-R\left(x, y\right)\right)\right) \\ {f}_{i}^{-} = min \left({b}_{i},max\left(-{b}_{i},R\left(x-{x}_{i},y-{y}_{i}\right)-R\left(x, y\right)\right)\right)\end{matrix} ,$ where *bᵢ* is the clipping parameter associated with the coefficient *cᵢ*. The clipping parameter *bᵢ* is determined by a clipping index *dᵢ*, as follows: ${b}_{i} = \left\{\begin{matrix}{2}^{BD} & when {d}_{i} = 0 \\ {2}^{BD - 1 - 2 {d}_{i}} & otherwise\end{matrix}\right. ,$ where *BD* denotes the sample bit depth, and *dᵢ* can be 0, 1, 2, or 3.

Integer arithmetic can be used, wherein the adaptive filtering operations are implemented as follows: $\overline{R} \left(x, y\right) = R \left(x, y\right) + \left[\left(\left[{\sum }_{i = 0}^{N - 2} {c}_{i} \times \left({f}_{i}^{+}+{f}_{i}^{-}\right)\right]+offset\right)≫shift\right] ,$ where $shift = NUM _ BITS - 1$ and $offset = 1 ≫ \left(shift-1\right) ,$ where NUM_BITS denotes the number of bits used to represent the adaptive filter coefficients *cᵢ* as signed integers.

The adaptive filter coefficients *cᵢ* and respective clipping indices *dᵢ* are determined at the encoder 200 end by minimizing the MSE between the original samples and their reconstructed values (e.g., by solving Wiener-Hopf equations as described in Karczewicz). If a rate-distortion condition is met, these coefficients and, if applicable, the corresponding clipping indices, are encoded in an Adaptation Parameter Set (APS). In VVC, an ALF APS may contain one luma filter set and up to eight chroma filters. The VVC standard also allows the use of pre-trained (pre-defined) luma filters so that their coefficients are hard-coded both at the encoder 200 and at the decoder 300 ends.

Adaptive filtering for luma provides for a further local adaptation with a classification based on local gradients. Adaptive filtering for luma therefore relies on filter sets - that is, a plurality of filters that come together with a mapping list where each class of the classification is associated with a specific filter from the set. Depending on the classification, geometric filter transformations are applied (such as a 90-degree rotation, a diagonal flip, or a vertical flip) so that the same filter coefficients may apply to different classes or gradient directions. A number of pre-trained luma filter sets are available at the encoder and at the decoder ends. The encoder chooses according to a rate-distortion criterion whether it shall transmit the luma filter set that has been optimized for the current slice or frame. At the CTU level, the encoder decides if the adaptive filtering is applied, and, if so, selects the luma filter set that shall be used out of the pre-trained filter sets and the filter sets that have already been transmitted.

Adaptive filtering for chroma does not apply local classification, rather it applies region-adapted filters. Up to eight adaptive filters for chroma are available at the same time at the encoder and at the decoder ends, and the filter to be used is signaled for each chroma coding tree block (CTB).

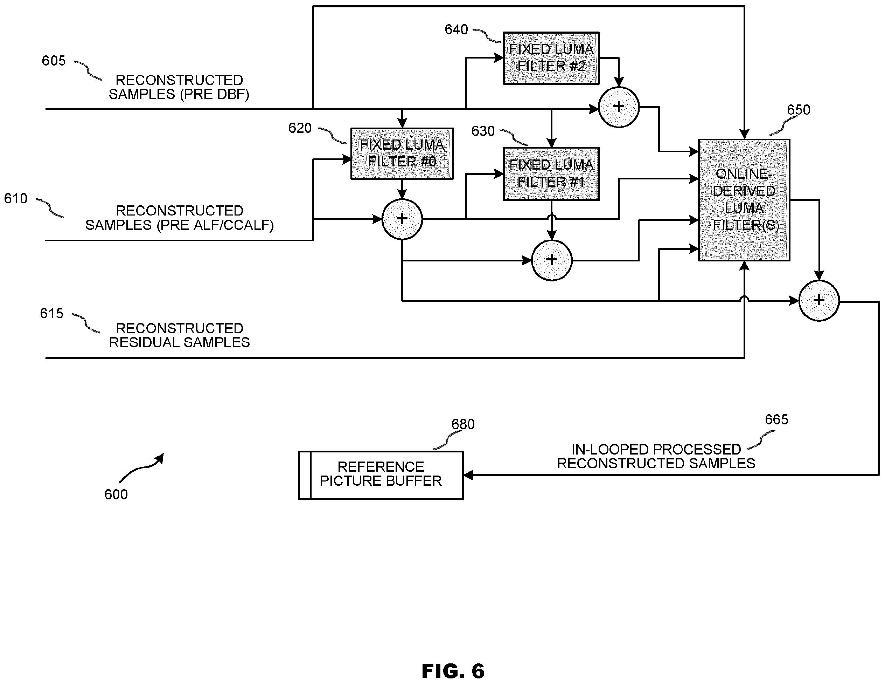

Adaptive filters have been further developed in the ECM software (see, JVET-AE2025, §3.4), including features such as: fixed adaptive filters for luma; classification-based fixed filters; a Gaussian fixed filter; signaled luma filtering; and an alternative 2x2 ALF classifier for luma. These features are described next in reference to FIG. 6.

FIG. 6 is a block diagram illustrating adaptive filtering 600. Adaptive luma filters (of ALF/CCALF 560) are shown in the example of FIG. 6, including three fixed filters 620, 630, 640, (that is, filters that are defined by pre-trained coefficients) and online-derived filters 650 (that is, filters that are defined by learned coefficients). These filters 620-650 operate on processed (pre ALF/CCALF 560) reconstructed samples 610, outputted by the clipper 550 shown in FIG. 5. Additionally, the fixed filters 620-650 and the online-derived filters 650 receive as input (pre DBF 510) reconstructed samples 605, 505. And the online-derived filters 650 also receive as input the reconstructed residual samples 615, 501.

In the ECM software, an intermediate filtering step is introduced for luma, where reconstructed samples are filtered by pre-trained filters (e.g., fixed filters 620-640) before being processed by an online-trained filtering step (e.g., employed by the online-derived filters 650). As illustrated in FIG. 6, in ECM-10, there are three fixed filters 620, 630, 640. Two of these fixed filters, denoted *f*₀ 620 and *f*₁ 630 are classification-based fixed filters, for which two respective Laplacian-based classifiers are applied to a 2x2 block. In each classifier, activity and directionality values are derived based on vertical, horizontal, and diagonal gradients using a window surrounding each 2x2 block. For each 2x2 block, the mean value of a surrounding window is calculated. Then, for each sample of this window, the difference between the sample value and the mean value is calculated. A scaling factor is determined based on an activity value derived from a Laplacian classifier. The square root of the sum of the squared differences is further quantized to C' by a scaling factor. The value of C' is an integer between 0 and 7, inclusively. Let *Cᵢ* denote the class index provided by the 896-class Laplacian classifier of i^{th} fixed filter, based on the activity and directionality values. The final class index ${C}_{i}^{′}$ is derived as: ${C}_{i}^{′} = C ′ \times 896 + {C}_{i} ,$ where, the number of classes, including directionality and activity (without the scaling), is computed as NbCLasses = primaryDirection*SecondaryDirection*activity = 8*7*16 = 896.

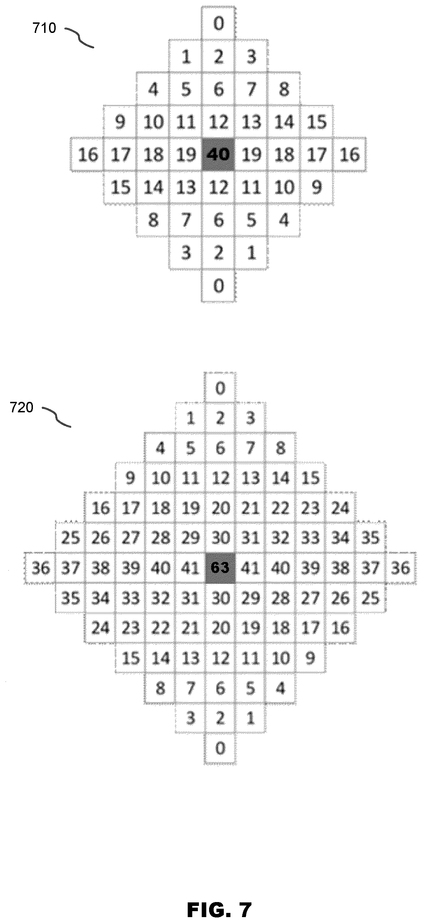

Two diamond-shaped fixed filters are selected from the two fixed filter sets by using the derived two class indices ${C}_{0}^{′}$ and ${C}_{1}^{′}$. The first fixed filter *f*₀ is applied to samples 605 before the application of DBF and to samples 610 before the application of any adaptive filtering - where a 13x13 diamond-shaped kernel (e.g., kernel 720 shown in FIG. 7, where the filter coefficients are indicated by indices) is applied to the samples 610 before the application of any adaptive filtering and an additional 9x9 diamond-shaped kernel (e.g., kernel 710 shown in FIG. 7, wherein the filter coefficients are indicated by indices) is applied to the samples 605 before the application of DBF. The second fixed filter *f*₁ is applied to the output of *f*₀ and to the samples 605 before the application of DBF, using a 9x9 diamond-shaped kernel on each. The third luma fixed filter, denoted *f*₂ 640, is a Gaussian fixed filter. This filter uses a 7x7 diamond kernel and operates without classification.

Following the filtering with the fixed filters, a signaled luma filter (e.g., one of the online-derived filters 650) can be applied to: 1) the samples outputted by the fixed filters (i.e., the two classifications-based fixed filters *f*₀ 620 and *f*₁ 630 and the Gaussian fixed filter *f*₂ 640); 2) the (pre DBF) reconstructed samples 605; and 3) the reconstructed residual samples 615. The value of a final filtered luma sample 665 can be computed as follows: $\begin{matrix}{R}^{˜} \left(x, y\right) = R \left(x, y\right) + \left[{\sum }_{i = 0}^{19} {c}_{i} \left({f}_{i}^{+}+{f}_{i}^{-}\right)\right] + \left[{\sum }_{i = 20}^{25} {c}_{i} \left({g}_{0 , i}^{+}+{g}_{0 , i}^{-}\right)\right] + \left[{\sum }_{i = 26}^{27} {c}_{i} \left(\begin{matrix}{h}_{i}^{+} + \\ {h}_{i}^{-}\end{matrix}\right)\right] + \left[{\sum }_{i = 28}^{33} {c}_{i} \left({g}_{2 , i}^{+}+{g}_{2 , i}^{-}\right)\right] + \left[{\sum }_{i = 34}^{34} {c}_{i} {g}_{0 , i}\right] + \left[{\sum }_{i = 35}^{35} {c}_{i} {g}_{1 , i}\right] + \left[{\sum }_{i = 36}^{36} {c}_{i} {h}_{i}\right] + \\ \left[{\sum }_{i = 37}^{37} {c}_{i} {r}_{i}\right] + \left[{\sum }_{i = 38}^{38} {c}_{i} {rFiltered}_{i}\right] + \left[{\sum }_{i = 39}^{39} {c}_{i} {g}_{2 , i}\right] ,\end{matrix}$ wherein: ${f}_{i}^{\pm }$ is the clipped difference between a neighboring sample and the current sample *R*(*x, y*); ${g}_{0 , i}^{\pm }$ is the clipped difference between an intermediate sample generated from the first fixed filter and the current sample *R*(*x, y*) ; ${g}_{2 , i}^{\pm }$ is the clipped difference between an intermediate sample generated from the third fixed filter and the current sample *R*(*x, y); g*_{0,34} is the clipped difference between the collocated intermediate sample generated from first fixed filter and the current sample *R(x,y); g*_{1,35} is the clipped difference between the collocated intermediate sample generated from second fixed filter and the current sample *R*(*x, y);* g_{2,39} is the clipped difference between the collocated intermediate sample generated from third fixed filter and the current sample *R*(*x, y);* ${h}_{i}^{\pm }$ is the clipped difference between a neighboring sample before DBF and the current sample *R(x, y); h*₃₆ is the clipped difference between the collocated sample before DBF and the current sample *R*(*x, y); r*₃₇ is the clipped neighboring residual sample value; and *rFiltered*₃₈ is the clipped residual sample filtered by a fixed-filter. For residual samples, the fixed filter used is a fixed filter from the first fixed filter set. (See JVET-AE2025 for further details.)

In addition to the above described features (of the fixed adaptive filters for luma, classification-based fixed filters 620, 630, Gaussian fixed filters 640, and signaled luma filters 650) the ECM software extended the luma classification with an additional alternative classifier. For a signaled luma filter set, a flag is signaled to indicate whether the alternative classifier is applied. Geometrical transformation is not applied to the alternative band classifier. When the band-based classifier is applied, the sum of sample values of a 2x2 luma block is calculated first; then, the class index is calculated as below: $class _ index = \left(sum*25\right) ≫ \left(sample bit depth+2\right)$

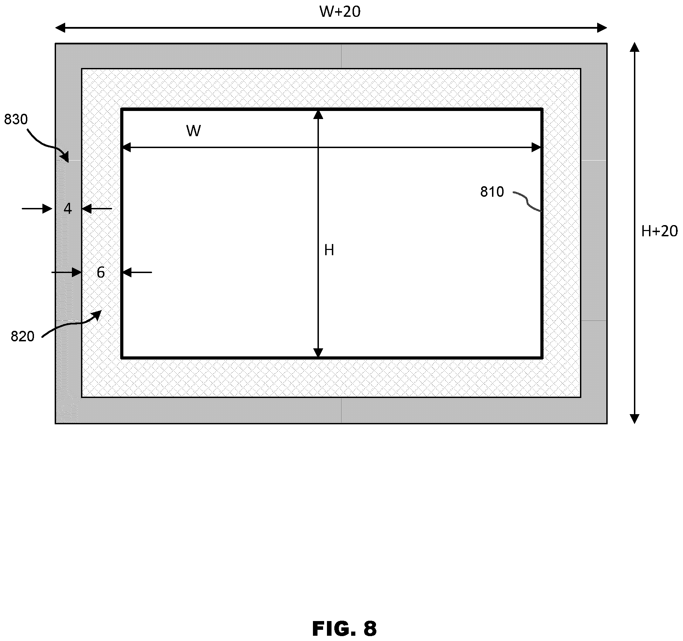

As demonstrated above with respect to FIGS. 4-6, employing adaptive filters, and in-loop processing in general, becomes progressively complex - including multiple in-loop processing stages being applied concurrently and successively. Adding to that complexity, the sizes of adaptive filters have been increased since the VVC standard had been formalized. Since multiple adaptive filters may be cascaded (as described in reference to FIG. 6), the correction applied to a sample by the application of cascading filters may be influenced by samples at a large distance. For example, the correction applied to a sample may be influenced by samples at a distance of 10 samples - that is, a distance of 4 samples due to the filtering by a 9x9 kernel 710 and additional distance of 6 samples due to the filtering by a 13x13 kernel 720. Consequently, to support cascading filtering of samples along the frame's boundary, the frame's size has to be extended by at least 10 at each side, as further explained below with respect to FIG. 8.

FIG. 8 is a diagram illustrating processing a frame along its boundary. **In** the example of FIG. 8, a frame 810 (e.g., associated with a luma or a chroma channel) is to be processed by cascading filters. This frame may be the input to the ALF/CCALF 560, including reconstructed samples (pre ALF/CCALF) 610. The illustrated frame 810 (having samples within the white region) is with a dimension of width W and of height H. A first filter with a 9x9 diamond-shaped kernel (e.g., filter 710) may be applied to the samples of the frame 810. The output of this first filter may then be filtered by a second filter with a 13x13 diamond-shaped kernel (e.g., filter 720). When applying the second filter to samples along the frame's boundary (samples in the top or the bottom lines of the frame or samples in the left or the right columns of the frame), 6 samples beyond that boundary have to be available - that is, samples from the patterned region 820 have to be generated by the filtering process of the first filter. **In** turn, when applying the first filter to samples along the boundary of the patterned region 820, 4 samples beyond that boundary have to be available - that is, samples from the grayed region 830 have to be available. Thus, to facilitate the cascaded filtering by the first and second filters, the frame 810 has to be extended by 10 samples at each side, forming an extended frame with a dimension W+20 and H+20. Notice that the above explanation is applicable to any sub-region of the frame (e.g., a CTU), so that 10 samples extending from each side of that sub-region should be available to facilitate the cascaded filtering.

In the HEVC or VVC standards, CTUs are processed independently, and so the manner in which samples along the boundary of each CTU are processed is, typically, determined based on the CTU's location in the frame.

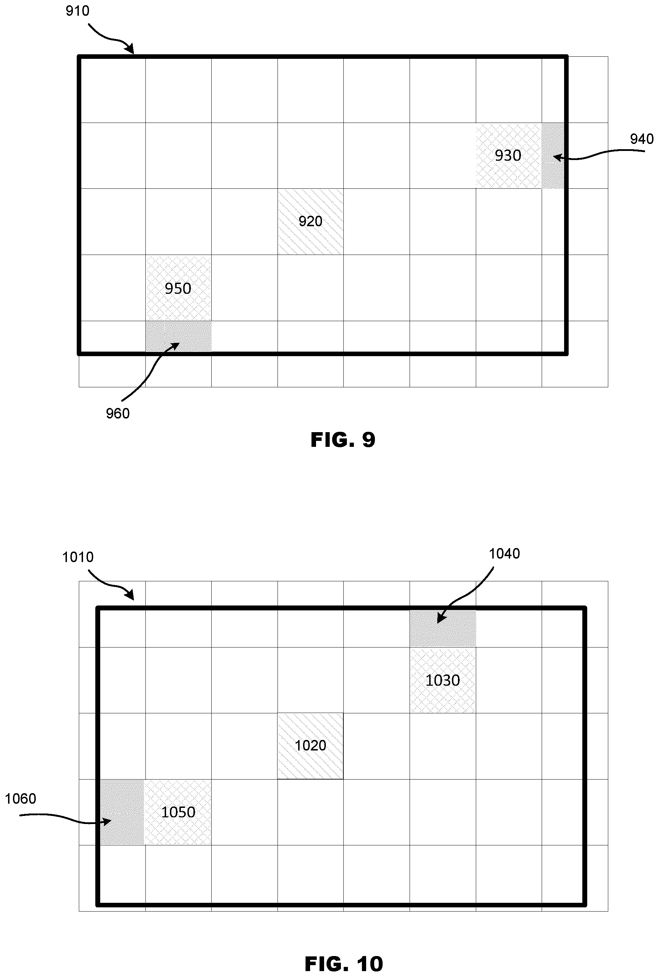

In the HEVC or VVC standards, the CTU grid is aligned with the top and left borders of the frame, as illustrated in FIG. 9 (see frame 910 shown in bold). The top line of the first line of CTUs is aligned with the top line of the frame, and the left column of the first column of CTUs is aligned with the left column of the frame. Thus, depending on the frame's dimension, the CTU grid may or may not overlap the right border and/or the bottom border of the frame. However, the CTU grid may be shifted by an offset (in the horizontal and/or vertical directions) to align the CTU grid with the frame's image content, as illustrated in FIG. 10. Such an alignment may reduce the coding cost caused by the compression process. Techniques for finding the optimal offset to shift the CTU grid are described in EP Patent Application 23306389.0, filed on August 17, 2023, the content of which is incorporated herein by reference in its entirety.

As illustrated in FIG. 9, a frame 910 (denoted by a bolded-line) is divided into CTUs according to a grid that is aligned with the left and top boundaries of the frame. Consequently, CTUs along the right and the bottom borders of the frame 910 may be not full CTUs (e.g., grayed CTUs 940, 960). However, as illustrated in FIG. 10, the CTU grid can be shifted by an offset (in the horizontal and vertical directions) to align the CTU grid with the frame's image content. Notice, however, that, when the CTU grid is shifted, CTUs that are not full can also be found along the top and the left borders of the frame 1010 (e.g., grayed CTUs 1040, 1060).

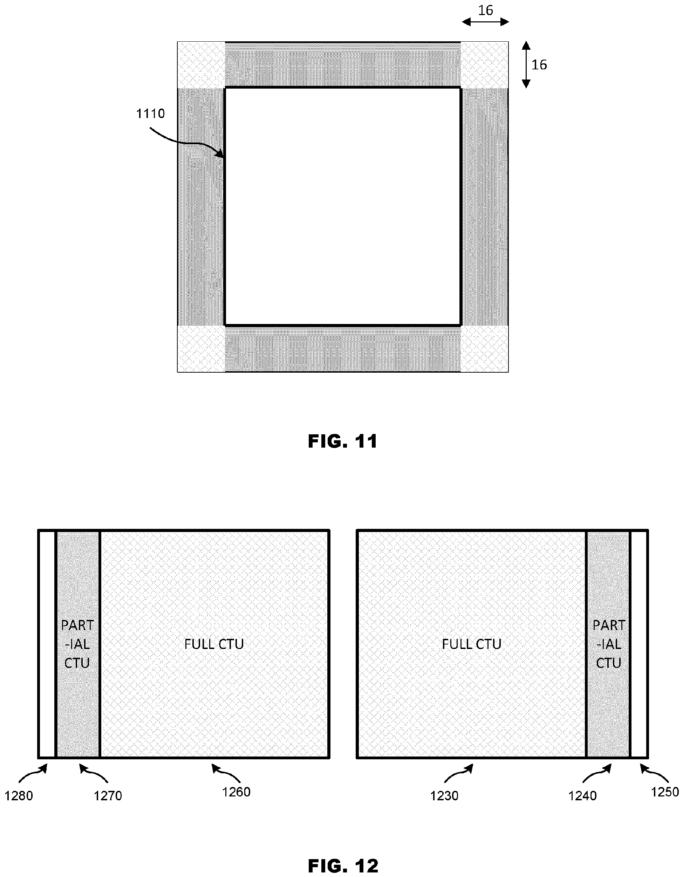

As mentioned above, in the HEVC or VVC standards, adaptive filters are applied to each CTU independently. As illustrated in FIG. 11, in ECM, for example, to process a given CTU 1110, an extra processing region is added. This extra processing region includes top, right, bottom, and left regions (e.g., grayed regions in FIG. 11) and corner regions (e.g., patterned regions in FIG. 11), adjacent to the CTU 1110. In the example of FIG. 11, the extra processing region extends the CTU size by 16 samples at each side. For CTUs that are internal to the frame (e.g., CTU 920 in FIG. 9) the extra processing region is available, as it can be extracted from neighboring CTUs. However, for CTUs that are closer to the frame's boundary (e.g., the patterned CTUs 930, 950 or the grayed partial CTUs 940, 960 shown in FIG. 9) some of the extra processing region may not be available because (unlike the example of FIG. 8) the frame may not be extended to provide the required extra processing regions for those CTUs. Instead, the required extra processing regions are generated from samples from within those CTUs (i.e., applying mirror-padding).

For example, a horizontal (or a vertical) dimension of a frame 910 may be N*CTUSize + 8, where N is the number of the CTUs within a CTU-line (or a CTU-column) and 8 is the width (or the height) of a partial CTU at the right (or bottom) end. In ECM-16.0, an extra processing region 16 samples wide is used. This should be sufficient, because (as explained with respect to FIG. 8) to support cascading filtering by a first filter 710 and a second filter 720, an extra region processing is required of at least 10 samples wide. For most CTUs, that extra processing region is available from the region of the frame 910. However, full CTUs and partial CTUs along the boundary of the frame may not have the required extra processing region. For example, for full CTUs along the right border of the frame (such as the patterned CTU 930), the partial CTUs to their right (such as the grayed CTU 940) may provide only some of the required extra processing region (e.g., in a case where the width of the partial CTUs is less than 10). Moreover, for partial CTUs along the right border of the frame (such as the grayed CTU 940) no extra processing region to the right is available. To address this, in ECM, the extra processing region is generated by mirroring the samples of the processed CTU.

In an aspect, when processing a full CTU along the boundary of a frame (e.g., 930), samples of an extra processing region can be taken from an adjacent partial CTU (e.g., 940), and the remaining samples required for cascading filtering of the full CTU can be generated from the partial CTU (and, if needed, also from the full CTU) by mirroring. For example, as illustrated in FIG. 12, in a case where the applied cascading filtering requires using 10 additional samples beyond the right border of the current CTU 1230 (e.g., CTU 930), and the partial CTU to its right 1240 (e.g., CTU 940) is only 8 samples wide, then the extra processing region may consist of the region of the partial CTU 1240 and an additionally region 1250 of width 2 can be generated by mirror-padding from the partial CTU 1240. In another example, if the partial CTU 1240 is only 4 samples wide, then the extra processing region may consist of the region of the partial CTU 1240 and an additionally region 1250 of width 6 can be generated by mirror-padding from the partial CTU 1240 and from the full CTU 1230.

Thus, according to aspects, a currently processed CTU of which reconstructed samples are to be fed into the ALF/CCALF 560 for processing by adaptive filters (as described with respect to FIGS. 5 and 6), where such CTU is a full CTU along the right or the bottom borders of the frame, an extra processing region can be extracted from the adjacent partial CTU to the right and/or to the bottom of the CTU. In an aspect, where the extra processing region cannot be extracted from an adjacent partial CTU (for example, when there are no partial CTUs), samples needed for the cascading filtering can be generated by mirror-padding.

In the current ECM-16.0, the need for extra processing region for CTUs along the boundary of the frame is addressed only along the right and bottom borders of the frame since the CTU grid is aligned to the left and top borders of the frame as shown in FIG. 9. However, when the CTU grid is shifted, as shown in FIG. 10, the need for extra processing region for CTUs along the left and top borders of the frame need to also be addressed.

Hence, in an aspect, when processing a full CTU along the boundary of a frame (e.g., 1050), samples of an extra processing region can be taken from an adjacent partial CTU (e.g., 1060), and the remaining samples required for cascading filtering of the full CTU can be generated from the partial CTU (and, if needed, also from the full CTU) by mirroring. For example, as illustrated in FIG. 12, in a case where the applied cascading filtering requires using 10 additional samples beyond the left border of the current CTU 1260 (e.g., CTU 1050), and the partial CTU to its left 1270 (e.g., CTU 1060) is only 8 samples wide, then the extra processing region may consist of the region of the partial CTU 1270 and an additionally region 1280 of width 2 can be generated by mirror-padding from the partial CTU 1270. In another example, if the partial CTU 1270 is only 4 samples wide, then the extra processing region may consist of the region of the partial CTU 1270 and an additionally region 1280 of width 6 can be generated by mirror-padding from the partial CTU 1270 and from the full CTU 1260.

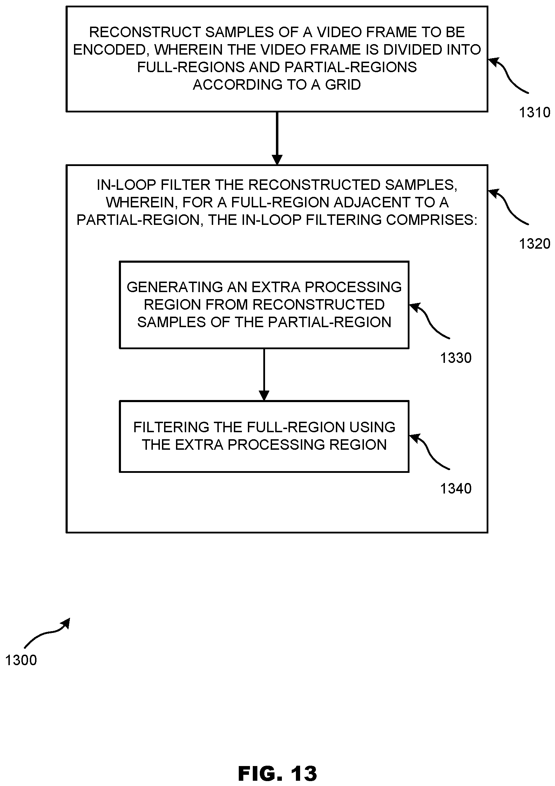

FIG. 13 is a flowchart of an example method for encoding video data 1300, according to which aspects of the present embodiments can be implemented. The method 1300, in step 1310, can be applied to reconstruct samples of a video frame of the video data to be encoded. The video frame is divided into full-regions (e.g., CTUs) and partial-regions (e.g., partial CTUs) according to a grid, where the partial-regions are located along the boundary of the video frame. That is, the partial-regions can be located along the bottom border, the right border, the top border, or the left border of the video frame. The method 1300, in step 1320, can be applied to perform in-loop filtering of the reconstructed samples. For a full-region that is adjacent to a partial-region, the in-loop filtering includes steps 1330 and 1340. In step 1330, an extra processing region can be generated from reconstructed samples of the partial-region. Then, in step 1340 the full-region can be filtered using the generated extra processing region.

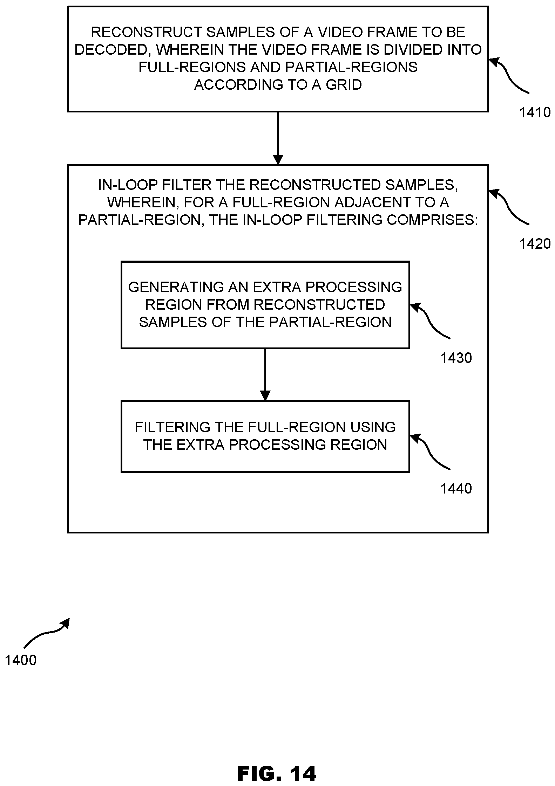

FIG. 14 is a flowchart of an example method for decoding video data 1400, according to which aspects of the present embodiments can be implemented. The method 1400, in step 1410, can be applied to reconstruct samples of a video frame of the video data to be decoded. The video frame is divided into full-regions (e.g., CTUs) and partial-regions (e.g., partial CTUs) according to a grid, where the partial-regions are located along the boundary of the video frame. That is, the partial-regions can be located along the bottom border, the right border, the top border, or the left border of the video frame. The method 1400, in step 1420, can be applied to perform in-loop filtering of the reconstructed samples. For a full-region that is adjacent to a partial-region, the in-loop filtering includes steps 1430 and 1440. In step 1430, an extra processing region can be generated from reconstructed samples of the partial-region. Then, in step 1440 the full-region can be filtered using the generated extra processing region.

The filtering (in steps 1340 and 1440), can be performed by filtering the full-region using a first filter associated with a first dimension, generating a first output, and by filtering the first output using a second filter associated with a second dimension. In this case, the dimension of the extra processing region (generated in steps 1330 and 1430) should be equal to at least the sum of the first and of the second dimensions. In an aspect, the filtering 1340, 1440 comprises cascaded filtering of the full-region using two or more filters, including one or more fixed adaptive filters, one or more online-derived adaptive filters, or a combination thereof. In another aspect, the filtering 1340, 1440 comprises cascaded filtering of the full-region using filters with diamond-shaped kernels of respective dimensions.

According to aspects, the extra processing region can be generated 1330, 1430 also from reconstructed samples of the full-region (in addition to the reconstructed samples of the adjacent partial-region). The extra processing region can be generated by mirror-padding - that is, mirroring reconstructed samples of the partial-region (and possibly of the full-region) into the extra processing region.

In an aspect, prior to generating the extra processing region 1330, 1430, and to the filtering of the full-region 1340, 1440, reconstructed samples of the full-region are filtered by a deblocking filter (DBF). In another aspect, prior to the generating of the extra processing region 1330, 1430, and to the filtering of the full-region 1340, 1440, reconstructed samples of the full-region are filtered by at least one of a bilateral filter (BIF), a filter applying a sample adaptive offset (SAO), or a filter applying a cross-component sample adaptive offset (CCSAO).

We have described several aspects and embodiments in the present disclosure. These aspects and embodiments provide at least the following outputs and results, including all combinations, across different claim categories and types:
- Encoding, into coded video data, syntax elements that can enable the decoder to decode the coded video data, according to any of the aspects described herein.
- A bitstream that includes one or more of the described syntax elements, or variations thereof. A bitstream can be any set of data whether transmitted, stored, or otherwise made available.
- Creating, transmitting, receiving, and/or decoding of the bitstream.
- An electronic device (e.g., a TV, a set-top box, a cell phone, or a tablet) that tunes (e.g., using a tuner) a channel to receive the bitstream or that receives (e.g., using an antenna) the bitstream over the air. The electronic device decodes the syntax elements from the bitstream, and, optionally, displays (e.g., using a monitor, screen, or any other type of display) a resulting image.
Various other generalized, as well as particularized, outputs, results, implementations, and claims are also supported and contemplated throughout this disclosure.

Various methods are described herein, and each of the methods comprises one or more steps or actions for achieving the described method. Unless a specific order of steps or actions is required for the proper operation of the method, the order and/or use of specific steps and/or actions can be modified or combined. Additionally, terms such as "first", "second", etc. can be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and can occur, for example, before, during, or in an overlapping time period with the second decoding.

Various methods and other aspects described in this application can be used to modify modules, for example, the modules of the video encoder 200 and the video decoder 300 as shown in FIG. 2 and FIG. 3. Moreover, the present aspects are not limited to a specific standard (such as VVC or HEVC) and can be applied, for example, to other standards and recommendations, as well as extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video data in order to produce an encoded bitstream. Additionally, the terms "reconstructed" and "decoded" can be used interchangeably, the terms "encoded" or "coded" can be used interchangeably, and the terms "image," "picture," and "frame" can be used interchangeably. Usually, but not necessarily, the term "reconstructed" is used on the encoder side while the term "decoded" is used on the decoder side.

Note that the syntax elements as used herein are descriptive terms. As such, they do not preclude the use of other syntax element names.

This disclosure has described various pieces of information, such as for example syntax, that can be transmitted or stored, for example. This information can be packaged or arranged in a variety of manners, including, for example, manners that are common in video standards such as putting the information into an SPS, a PPS, a NAL unit, a header (for example, a NAL unit header, or a slice header), or an SEI message. Other manners are also available, including, for example, manners common for system level or application level standards such as signaling the information into one or more of the following:
a. SDP (session description protocol), a format for describing multimedia communication sessions for the purposes of session announcement and session invitation, for example, as described in RFCs and used in conjunction with RTP (Real-time Transport Protocol) transmission.
b. DASH MPD (Media Presentation Description) Descriptors, for example, as used in DASH and transmitted over HTTP. A descriptor is associated with a Representation or collection of Representations to provide additional characteristics to the content Representation.
c. RTP header extensions, for example, as used during RTP streaming.
d. ISO Base Media File Format, for example, as used in OMAF and using boxes which are object-oriented building blocks defined by a unique type identifier and length (also known as 'atoms' in some specifications).
e. HLS (HTTP live Streaming) manifest transmitted over HTTP. A manifest can be associated, for example, with a version or collection of versions of content to provide the characteristics of the version or collection of versions.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants (PDAs), and other devices that facilitate communication of information between end-users.

Reference to "one/an aspect" or "one/an embodiment" or "one/an implementation," as well as other variations thereof, means that a particular feature, structure, characteristic, and so forth described in connection with the aspect/embodiment/implementation is included in at least one embodiment. Thus, the appearances of the phrase "in one/an aspect" or "in one/an embodiment" or "in one/an implementation," as well any other variations, appearing in various places throughout this application, are not necessarily all referring to the same embodiment.

Additionally, this application can refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing," intended to be a broad term. Receiving the information can include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B," is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization parameter for de-quantization. **In** this manner, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual data, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

## Claims

1. A method for encoding video data, comprising:
reconstructing samples of a video frame of the video data to be encoded, wherein the video frame is divided into full-regions and partial-regions according to a grid, and wherein the partial-regions are located along the boundary of the video frame; and
in-loop filtering the reconstructed samples, wherein, for a full-region adjacent to a partial-region, the in-loop filtering comprises:
generating an extra processing region from reconstructed samples of the partial-region, and
filtering the full-region using the extra processing region.

2. An apparatus for encoding video data, comprising:
at least one processor; and
memory storing instructions that, when executed by the at least one processor, cause the apparatus to:
reconstruct samples of a video frame of the video data to be encoded,
wherein the video frame is divided into full-regions and partial-regions according to a grid, and wherein the partial-regions are located along the boundary of the video frame, and
in-loop filter the reconstructed samples, wherein, for a full-region adjacent to a partial-region, the in-loop filtering comprises:
generating an extra processing region from reconstructed samples of the partial-region, and
filtering the full-region using the extra processing region.

3. A method for decoding video data, comprising:
reconstructing samples of a video frame of the video data to be decoded, wherein the video frame is divided into full-regions and partial-regions according to a grid, and wherein the partial-regions are located along the boundary of the video frame; and
in-loop filtering the reconstructed samples, wherein, for a full-region adjacent to a partial-region, the in-loop filtering comprises:
generating an extra processing region from reconstructed samples of the partial-region, and
filtering the full-region using the extra processing region.

4. An apparatus for decoding video data, comprising:
at least one processor; and
memory storing instructions that, when executed by the at least one processor, cause the apparatus to:
reconstruct samples of a video frame of the video data to be decoded,
wherein the video frame is divided into full-regions and partial-regions according to a grid, and wherein the partial-regions are located along the boundary of the video frame, and
in-loop filter the reconstructed samples, wherein, for a full-region adjacent to a partial-region, the in-loop filtering comprises:
generating an extra processing region from reconstructed samples of the partial-region, and
filtering the full-region using the extra processing region.

5. The method according to claim 1 or 3, or the apparatus according to claim 2 or 4, wherein the full-region is a coding-tree unit (CTU) and the partial-region is a partial CTU.

6. The method according to any one of claims 1, 3 or 5, or the apparatus according to any one of claims 2 or 4-5, wherein the filtering comprises:
filtering the full-region using a first filter associated with a first dimension, generating a first output; and
filtering the first output using a second filter associated with a second dimension.

7. The method according to claim 6, or the apparatus according to claim 6, wherein a dimension of the generated extra processing region is equal to at least a sum of the first dimension and of the second dimension.

8. The method according to any one of claims 1, 3 or 5-7, or the apparatus according to any one of claims 2 or 4-7, wherein the extra processing region is generated also from reconstructed samples of the full-region.

9. The method according to any one of claims 1, 3 or 5-8, or the apparatus according to any one of claims 2 or 4-8, wherein the extra processing region is generated by mirror-padding.

10. The method according to any one of claims 1, 3 or 5-9, or the apparatus according to any one of claims 2 or 4-9, wherein the partial-region is located along the bottom border or the right border of the video frame.

11. The method according to any one of claims 1, 3 or 5-9, or the apparatus according to any one of claims 2 or 4-9, wherein the partial-region is located along the top border or the left border of the video frame.

12. The method according to any one of claims 1, 3 or 5-11, or the apparatus according to any one of claims 2 or 4-11, wherein the filtering comprises cascaded filtering of the full-region using two or more filters, including one or more fixed adaptive filters, one or more online-derived adaptive filters, or a combination thereof.

13. The method according to any one of claims 1, 3 or 5-12, or the apparatus according to any one of claims 2 or 4-12, wherein the filtering comprises cascaded filtering of the full-region using filters with diamond-shaped kernels of respective dimensions.

14. The method according to any one of claims 1, 3 or 5-13, or the apparatus according to any one of claims 2 or 4-13, wherein prior to the generating of the extra processing region and the filtering of the full-region, reconstructed samples of the full-region are filtered by a deblocking filter (DBF).

15. The method according to any one of claims 1, 3 or 5-14, or the apparatus according to any one of claims 2 or 4-14, wherein prior to the generating of the extra processing region and the filtering of the full-region, reconstructed samples of the full-region are filtered by at least one of a bilateral filter (BIF), a filter applying a sample adaptive offset (SAO), or a filter applying a cross-component sample adaptive offset (CCSAO).
